# FASCICULE DE BREVET EUROPEEN

(11) **EP 4 049 895 B1**
(45) Date de publication et mention de la délivrance du brevet: **01.04.2026**
(21) Numéro de dépôt: 22158001.2
(22) Date de dépôt: 22.02.2022
(51) Int. Cl.: B60N 3/10

(54) **DISPOSITIF DE FIXATION MAGNÉTIQUE**
MAGNETISCHE BEFESTIGUNGSVORRICHTUNG
MAGNETIC ATTACHMENT DEVICE

(30) Priorité: 26.02.2021 FR 2101890
(43) Date de publication de la demande: 31.08.2022
(73) Titulaire: A. Raymond et Cie, 38000 Grenoble (FR)
(72) Inventeur: LAMOUREUX, David, 38100 GRENOBLE (FR)
(74) Mandataire: Santarelli

(56) Documents cités:
- WO-A1-00/49919
- US-B1- 10 292 514
- US-B1- 10 308 155

## Description

### Domaine technique de l'invention

La présente invention concerne un dispositif de fixation magnétique, notamment un système de fixation comportant une base de fixation et un article à fixer, et plus particulièrement la base de fixation et l'article à fixer pourvus des aimants. Par exemple, un accessoire gobelet et une trappe de fixation forment un système selon la présente invention. La présente invention se rapporte également à une base de fixation destinée à être utilisée dans le système de fixation.

### Technique antérieure

Le mécanisme de verrouillage/déverrouillage magnétique est utilisé dans la serrure. On connaît de l'état de la technique cette mise en œuvre dans le crochet/détacheur antivol magnétique.

Le document brevet EP2427072 décrit une serrure magnétique comportant deux aimants qui exercent une force d'attraction l'un sur l'autre pour assurer le verrouillage. Le document brevet US10 308 155 B1 divulgue un porte-gobelet universel qui peut être utilisé comme porte-gobelet ou dans une cavité de porte-gobelet.

### Exposé de l'invention

La présente invention propose un dispositif de fixation magnétique qui permet de fixer un article sur une structure tout en garantissant un simple montage et/ou démontage.

Un premier aspect de l'invention se rapporte à un système de fixation magnétique comportant une base de fixation magnétique et un article à retenir ayant des moyens d'engagement, la base comportant au moins un premier et un deuxième moyens de retenue qui sont mobiles en va-et-vient entre une position verrouillée et une position déverrouillée, dans la position verrouillée les moyens de retenue pouvant être reçus dans les moyens d'engagement, dans lequel,
- le premier moyen de retenue comporte au moins un premier aimant de mouvement, le deuxième moyen de retenue comporte un deuxième aimant de mouvement,
- l'article à retenir comporte au moins deux aimants de contact,
- les aimants de contact exercent une force sur les aimants de mouvement, ce qui maintient le premier moyen de retenue et le deuxième moyen de retenue dans les moyens d'engagement dans la position verrouillée.

L'invention est avantageusement mise en œuvre selon les modes de réalisation et les variantes exposées ci-après, lesquelles sont à considérer individuellement ou selon toute combinaison techniquement opérante.

Dans un mode de réalisation, le système de fixation présente les caractéristiques suivantes :
- le premier moyen de retenue et le deuxième moyen de retenue sont bloqués en rotation par une rainure.

Dans un mode de réalisation, le système de fixation présente les caractéristiques suivantes :
- l'article à retenir comporte une interface de fixation comprenant un évidement, les moyens d'engagement présentent une forme de rainure,
- dans la position verrouillée la base de fixation est reçue dans l'évidement, le premier et le deuxième moyens de retenue servant de crans de fixation viennent en prise dans la rainure.

Dans un mode de réalisation, le système de fixation présente les caractéristiques suivantes :
- la base de fixation comporte deux premiers aimants, dont les pôles Sud indiquent dans une direction de celle du pôle Nord des aimants de mouvement, les deux premiers aimants et les deux aimants de mouvement étant disposés rotatifs et alternatifs dans un plan,
- l'article à retenir comporte deux deuxièmes aimants
- les deux premiers aimants étant agencés de sorte qu'ils exercent une force d'attraction sur les deux deuxièmes aimants dans la position verrouillée.

Dans un mode de réalisation, les aimants de contact et les deuxièmes aimants sont disposés rotatifs et alternatifs sur un support d'aimants.

Dans un mode de réalisation, le système de fixation dans la position verrouillée peut être transformée par un déplacement rotatif relatif entre la base de fixation et l'article à retenir dans la position déverrouillée dans laquelle,
- les deux deuxièmes aimants exercent une force sur les aimants de mouvement, ce qui dégage le premier et le deuxième moyens de retenue dans les moyens d'engagement,
- les aimants de contact exercent une force de répulsion sur les deux premiers aimants.

Dans un mode de réalisation, le déplacement rotatif est de 90 degrés.

Dans un mode de réalisation, la base de fixation et l'article à retenir comportent respectivement des contacts électriques, les contacts étant liés électriquement dans la position verrouillée.

Dans un mode de réalisation, l'article à retenir est un accessoire gobelet, tel qu'un porte-gobelet.

Un autre aspect de l'invention se rapporte à un véhicule comprenant un système de fixation.

Un autre aspect de l'invention se rapporte à une base de fixation magnétique, destinée à retenir un article ayant des moyens d'engagement, la base comporte un premier et un deuxième moyens de retenue qui sont mobiles en va-et-vient entre une position verrouillée et une position déverrouillée, dans la position verrouillée les moyens de retenue pouvant être reçus dans les moyens d'engagement de l'article. Le premier moyen de retenue comporte un premier aimant de mouvement, le deuxième moyen de retenue comporte un deuxième aimant de mouvement, et qu'en présence d'une force magnétique sur chaque des aimants de mouvement, le premier moyen de retenue et le deuxième moyen de retenue s'écartent et sont expulsés vers la position verrouillée.

Dans un mode de réalisation, le premier moyen de retenue et le deuxième moyen de retenue sont bloqués en rotation par une rainure de translation.

Dans un mode de réalisation, la base de fixation comporte deux premiers aimants dont les pôles Sud indiquent dans une direction de celle du pôle Nord des aimants de mouvement, les deux premiers aimants et les deux aimants de mouvement étant disposés rotatifs et alternatifs.

Dans un mode de réalisation, la base de fixation peut être agencée sous forme d'une trappe rétractable dans une structure, tel qu'un support console centrale.

Dans un mode de réalisation, la base de fixation comporte des moyens anti-retour, tels que des aimants anti-retour, servant à maintenir la base de fixation dans une position rétractée.

Un autre aspect de l'invention se rapporte à un véhicule comprenant une base de fixation magnétique.

Avantageusement, les aimants de mouvement de la base permettent de fixer l'article à retenir en présence d'une force magnétique sur ces aimants, facilitant ainsi le montage/démontage. Les premiers aimants de la base de fixation la rendent rétractable sous l'effet de force magnétique. La présence des aimants dans l'article qui sont agencés à coupler avec les aimants de la base de fixation assure les forces magnétiques nécessaires. Le fait qu'une simple rotation suffit à découpler les aimants de ces deux pièces est particulièrement avantageux pour le démontage de l'article à retenir.

### Brève description des figures

la Figure 1 représente une vue d'un système de fixation magnétique comportant une base de fixation et un article à retenir, d'où la base de fixation est agencée sous forme d'une trappe rétractable dans un support console centrale voiture ;
la Figure 2 représente une vue en perspective d'un système de fixation magnétique de la Figure 1, d'où l'article est à fixer à la base de fixation qui est en état rétracté ;
la Figure 3A représente une vue d'un système de fixation magnétique de la Figure 2, d'où l'article à retenir en vue de coupe approche la base de fixation;
la Figure 3B représente une vue d'un système de fixation magnétique en position verrouillée de la Figure 2, d'où l'article à retenir en vue de coupe est fixé à la base de fixation ;
la Figure 3C représente une vue d'un système de fixation magnétique en position déverrouillée de la Figure 2, d'où l'article à retenir en vue de coupe est tourné d'un angle par rapport à la position montrée sur la Figure 3B ;
la Figure 4 représente un agencement des aimants de la base de fixation magnétique et un agencement des aimants de l'article à retenir selon un mode de réalisation ;
la Figure 5A représente un agencement des aimants de la base de fixation magnétique et un agencement des aimants de l'article à retenir de la Figure 4 lorsque le système de fixation magnétique est en position verrouillée;
la Figure 5B représente un agencement des aimants de la base de fixation magnétique et un agencement des aimants de l'article à retenir de la Figure 4 lorsque le système de fixation magnétique est en position déverrouillée;
la Figure 6 représente une vue partielle de coupe du système de fixation magnétique en position verrouillée selon un mode de réalisation ;
la Figure 7 représente une vue en éclaté d'un article à retenir selon un mode de réalisation ;
la Figure 8 illustre une vue en éclaté d'une base de fixation magnétique selon un mode de réalisation.

### Description des modes de réalisation

Les différentes figures ainsi que les éléments d'une même figure ne sont pas nécessairement représentées à la même échelle. Sur l'ensemble des figures, les éléments identiques portent la même référence numérique.

La terminologie employée dans la présente description ne doit en aucun cas être interprétée de manière limitative ou restrictive, simplement parce qu'elle est employée en conjonction avec une description détaillée de certains modes de réalisation de l'invention.

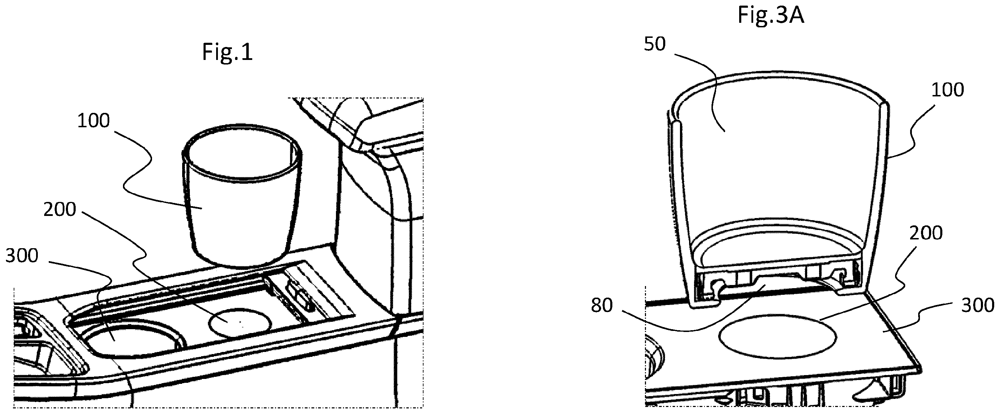

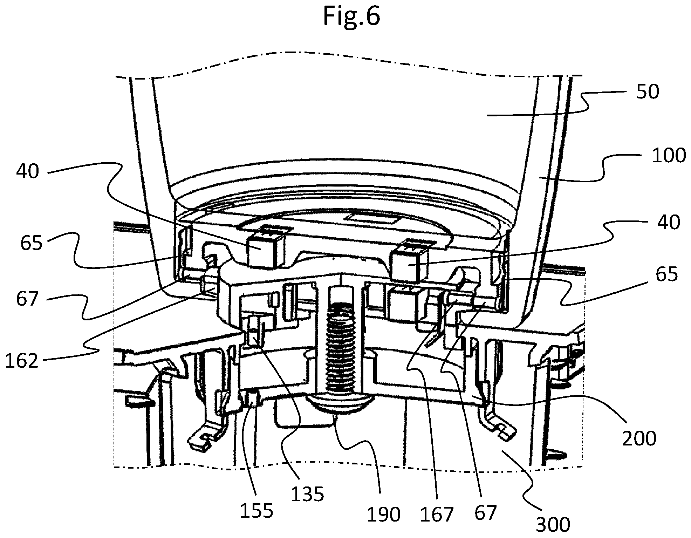

La Figure 1 représente une vue d'un système de fixation magnétique constituée essentiellement d'une base 200 de fixation et un article 100 à retenir. Il est montré sur Fig. 1 que la base 200 de fixation est agencée sous forme d'une trappe rétractable dans une structure 300 telle qu'un support console centrale voiture. À titre d'exemple uniquement, l'article 100 à retenir est un accessoire gobelet, tel qu'un porte-gobelet. D'autres articles à retenir tels que des lampes sont également prévus par la présente invention. L'article à retenir 100 peut être électriquement lié à la base 200 de fixation, comme illustré sur la Figure 6 qui sera détaillée plus loin. La structure 300 est pourvue d'un logement pour recevoir la trappe amovible 200. En état rétracté, la trappe 200 est reçue entièrement dans le logement.

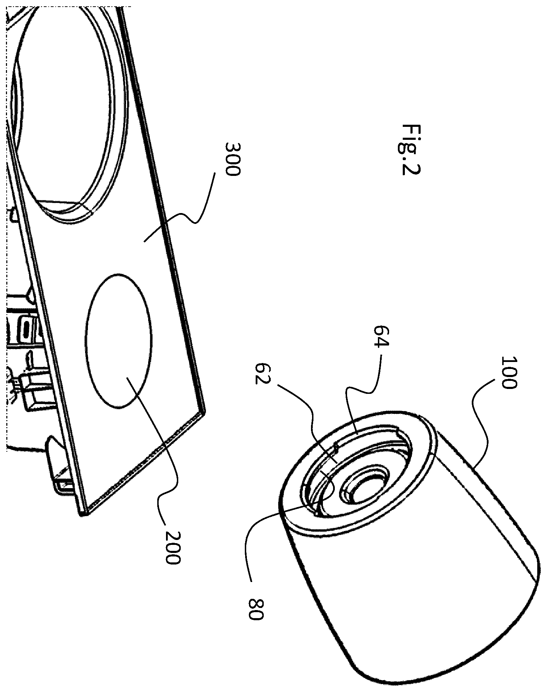

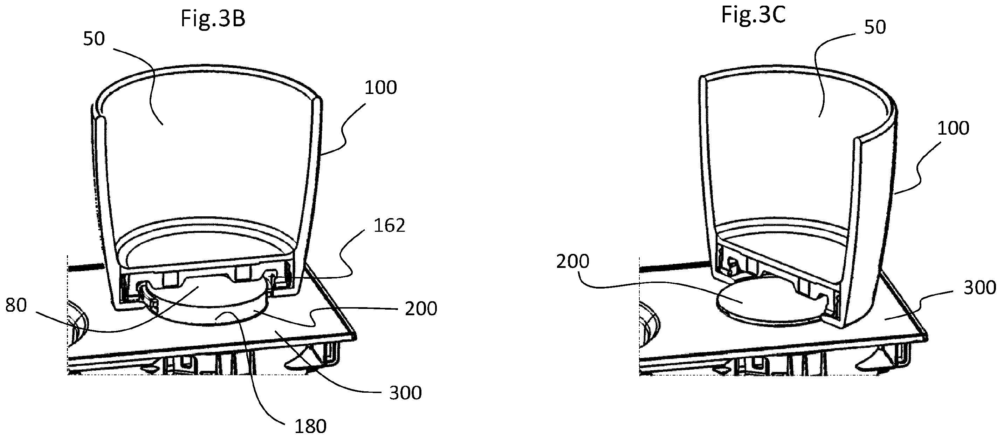

La Figure 2 représente une vue en perspective d'un système de fixation magnétique selon l'invention, d'où la base de fixation est en état rétracté dans lequel la trappe amovible 200 est reçue entièrement dans le logement. Dans un mode réalisation, la trappe 200 en état rétracté présente une surface supérieure formant une partie de la surface de la structure 300. L'article 100 à retenir est pourvu d'une interface 90 de fixation par laquelle l'article 100 peut être monté à la base de fixation qui ressort du logement. Dans un mode de réalisation, l'interface 90 de fixation comporte un évidement 80 et les moyens d'engagement 62. Préférentiellement, les moyens d'engagement 62 se présentent sous une forme de rainure. La base de fixation 200 est reçue dans l'évidement 80 lorsque l'article 100 est verrouillé à la base, comme illustré sur la Figure 3B qui sera détaillée plus loin.

La Figure 3A représente une vue d'un système de fixation magnétique lorsque l'article 100 à retenir illustré en vue de coupe approche la base de fixation 200. Avant de coiffer la trappe 200 de l'article 100, l'évidement 80 est mis en face de la surface supérieure de la trappe 200 qui est en état rétracté. La trappe 200 et l'article 100 à retenir sont dotés respectivement des premiers aimants 120 et des deuxièmes aimants 20. Lorsque l'article 100 dont l'évidement 80 est en face de la trappe 200 est orienté dans un sens déterminé, les deuxièmes aimants 20 exercent une force d'attraction sur les deux premiers aimants 120, ce qui permet la sortie de la trappe 200 du logement. Ledit sens déterminé, qui dépend de l'arrangement des premiers aimants 120 et deuxièmes aimants 20, peut être indiqué sur l'article à retenir 100. Dans un mode de réalisation, les premiers aimants 120 et deuxièmes aimants 20 sont agencés de sorte que les deuxièmes aimants 20 exercent une force sur les premiers aimants 120, l'article 200 ayant la tendance de se mettre dans ledit sens déterminé sous l'effet de cette force.

Préférentiellement, la surface supérieure de la trappe 200 présente une forme de cercle.

La trappe 200 comporte un premier et un deuxième moyens 160 de retenue qui sont mobiles en va-et-vient entre une première position et une deuxième position. Dans la première position, la base de fixation 200 peut être reçue dans l'évidement 80 et les moyens 160 de retenue peuvent être reçus dans les moyens 62 d'engagement. La Figure 3B représente une vue d'un système de fixation magnétique en position verrouillée, d'où l'article à retenir en vue de coupe est fixé à la base de fixation. Dans la première position, le premier et le deuxième moyens 160 de retenue servant de crans de fixation viennent en prise dans la rainure 62. Les parties saillantes 162 des moyens de retenue 160 sont engagées dans la rainure, ce qui permet de verrouiller l'article 100.

Le premier moyen 160 de retenue et le deuxième moyen 160 de retenue comportent respectivement un premier aimant 140 de mouvement et un deuxième aimant 140 de mouvement. L'article 100 à retenir comporte deux aimants 40 de contact. Les aimants 40 de contact exercent une force sur les aimants 140 de mouvement, ce qui maintient le premier moyen 160 de retenue et le deuxième moyen 160 de retenue dans les moyens 62 d'engagement dans la position verrouillée. Avant l'engagement des moyens de retenue 160 et la rainure 62, les aimants 40 de contact commencent à exercer une force sur les aimants 140 de mouvement donc sur les moyens de retenue 160. Sous l'effet de cette force magnétique, les moyens de retenue 160 se déplacent et font saillie hors de la trappe 200.

Dans un mode de réalisation, le premier et le deuxième moyens 160 de retenue sont bloqués en rotation par une rainure de translation 170 suivant laquelle, les moyens 160 de retenue sont mobiles en va-et-vient.

Dans la position verrouillée illustrée sur la Figure 3B, l'article 100 est verrouillée dans la direction axiale. En revanche, l'article 100 sous l'effet d'un couple peut se déplacer de manière rotative.

La Figure 3C représente une vue d'un système de fixation magnétique en position déverrouillée, d'où l'article à retenir est tourné d'un angle par rapport à la position montrée sur la Figure 3B. Suite à une rotation à partir de la position verrouillée, par exemple de 90 degrés, les deux deuxièmes aimants 20 exercent une force sur les aimants 140 de mouvement, ce qui permet aux moyens de retenue 160 de se déplacer vers la deuxième position dans laquelle les moyens de retenue 160 ne font pas saillie hors de la trappe 200, ainsi le premier et le deuxième moyens 160 de retenue sont dégagés de la rainure 62. Dans la deuxième position, les aimants 40 de contact exercent une force de répulsion sur les deux premiers aimants 120, ce qui repousse la trappe 200 dans sa position rétractée dans la structure 300. En même temps, la force que les deux deuxièmes aimants 20 exercent sur les aimants 140 de mouvement contribue à cet effet de repousser.

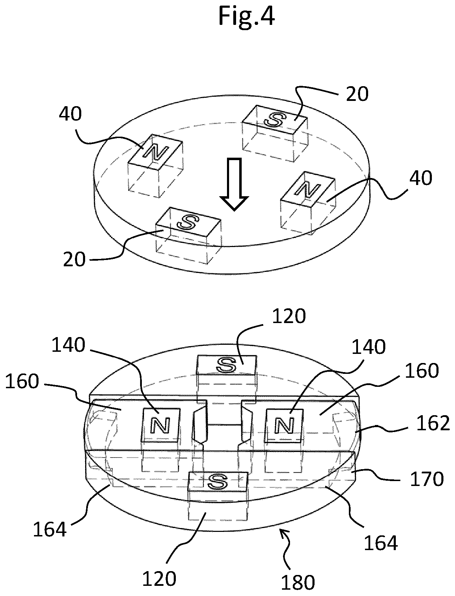

La Figure 4 représente un agencement des aimants de la base de fixation magnétique et un agencement des aimants de l'article à retenir selon un mode de réalisation. Dans le mode de réalisation illustré, les pôles Sud des deux premiers aimants 120 de la base 200 de fixation indiquent sensiblement dans la même direction, tandis que les pôles Nord des aimants 140 de mouvement indiquent sensiblement la même direction que cette dernière. Les deux premiers aimants 120 et les deux aimants 140 de mouvement sont disposés rotatifs et alternatifs, par exemple dans un plan. Les deux premiers aimants 120 sont disposés d'une manière opposée dans le plan. Dans un mode de réalisation préféré, ces aimants 120, 140 sont disposés à distance angulaire égal. De préférence, les deux aimants 140 de mouvement sont logés dans deux cavités des moyens 160 de retenue. Avantageusement, les moyens 160 de retenue peuvent être entraînés par une force magnétique exercée sur les deux aimants 140 de mouvement.

Dans un mode de réalisation, les moyens de retenue 160 comportent des organes limitateurs 164 qui viennent en butée contre la base 200 de fixation lorsque les moyens 160 de retenue font saillie.

L'article 100 à retenir comporte deux deuxièmes aimants 20 et deux aimants 40 de contact. Les aimants 40 de contact et les deuxièmes aimants 20 sont disposés rotatifs et alternatifs, de sorte que les aimants 40 de contact et les deuxièmes aimants 20 soient opposés respectivement. Les quatre aimants 20, 40 sont de préférence dans le même plan, par exemple disposés sur un support d'aimants. Dans un mode de réalisation préféré, les deuxièmes aimants 20 sont arrangés symétriques par rapport à l'axe reliant les aimants 40 de contact. Les quatre aimants 20, 40 sont de préférence disposés à distance angulaire égal.

Lorsque l'article 100 à retenir s'approche de la base 200 de fixation, les aimants 20, 40 se déplacent en suivant la direction de la flèche indiquée.

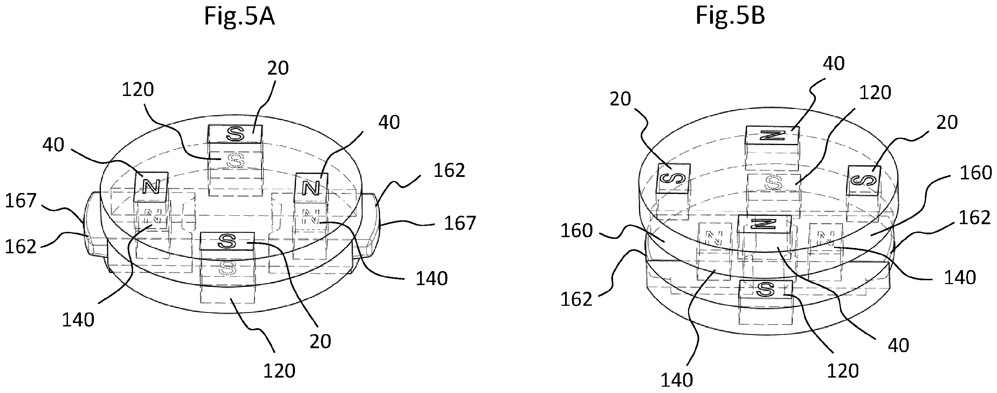

La Figure 5A illustre l'agencement des aimants de la base 200 de fixation magnétique et des aimants de l'article 100 à retenir lorsque le système de fixation magnétique est en position verrouillée. Nous constatons que les aimants 20, 40 de l'article 100 à retenir sont dans leur position de force d'attraction, c'est-à-dire, les deuxièmes aimants 20 exercent une force d'attraction sur deux premiers aimants 120 de la trappe 200 qui permet à la trappe de se déplacer vers l'article 100 et de sortir de son état rétracté, en même temps, les aimants 40 de contact exercent une force d'attraction sur les aimants 140 de mouvement des moyens de retenue 160 qui fait apparaître les parties saillantes servant de crans 162. Les crans 162 viennent en prise dans la rainure 62 de l'article 100 (non illustré), ce qui permet la fixation de l'article 100 à la base 200, les forces magnétiques entre les aimants de l'article 100 et la base 200 venant à renforcer cette fixation.

Dans un mode de réalisation, chaque cran 162 comporte avantageusement un élément électrique 167 tel qu'une borne électrique en cuivre permettant établir le contact électrique. En position verrouillée, ces bornes entrent en contact avec des éléments de connexion électrique prévus aux moyens d'engagement 62 de l'article 100 à retenir, permettant avantageusement une connexion électrique entre l'article à retenir et la base de fixation.

La Figure 5B représente un agencement des aimants de la base 200 de fixation magnétique et un agencement des aimants de l'article 100 à retenir, après une rotation de 1/4 tour de l'article 100 à retenir de la Fig. 5A par rapport à la base de fixation 200, le système de fixation magnétique étant en position déverrouillée. Les deuxièmes aimants 20 prennent la position des aimants 40 de contact sur la Figure 5A. Comme les pôles Nord des aimants 40 sont orientés dans une direction opposée à celle pour les aimants 20, ces derniers exercent une force de répulsion sur les aimants 140 de mouvement qui se trouvent au-dessous des aimants 20 dans cette position, ceci entraîne un déplacement de translation des moyens 160 de retenue dans la rainure 170 de sorte que les moyens 160 de retenue se rétractent et ne fassent pas saillie. En même temps, les aimants 40 de contact se trouvant au-dessus des deux premiers aimants 120 exercent une force de répulsion sur les premiers aimants 120, ce qui repousse la base 200 de fixation vers le bas et dans son état rétracté. En même temps, la force que les deux deuxièmes aimants 20 exercent sur les aimants 140 de mouvement contribue à cet effet de repousser.

La Figure 6 représente une vue partielle de coupe du système de fixation magnétique en position verrouillée selon un mode de réalisation. L'article 100 à retenir comprend avantageusement deux éléments électriques 67 opposés, tels que deux bornes électriques liées à un circuit électrique de l'article 100, qui sont agencés dans les moyens d'engagement 62. Dans la position verrouillée, l'élément électrique 167 de chaque cran 162 vient en contact avec un élément électrique 67, établissant ainsi une connexion électrique entre l'article 100 à retenir et la base 200 de fixation. Dans un mode de réalisation, la base de fixation comporte en outre des aimants 135, 155 de maintien qui sont agencés de sorte à maintenir la base 200 rétractée dans le logement de la structure 300.

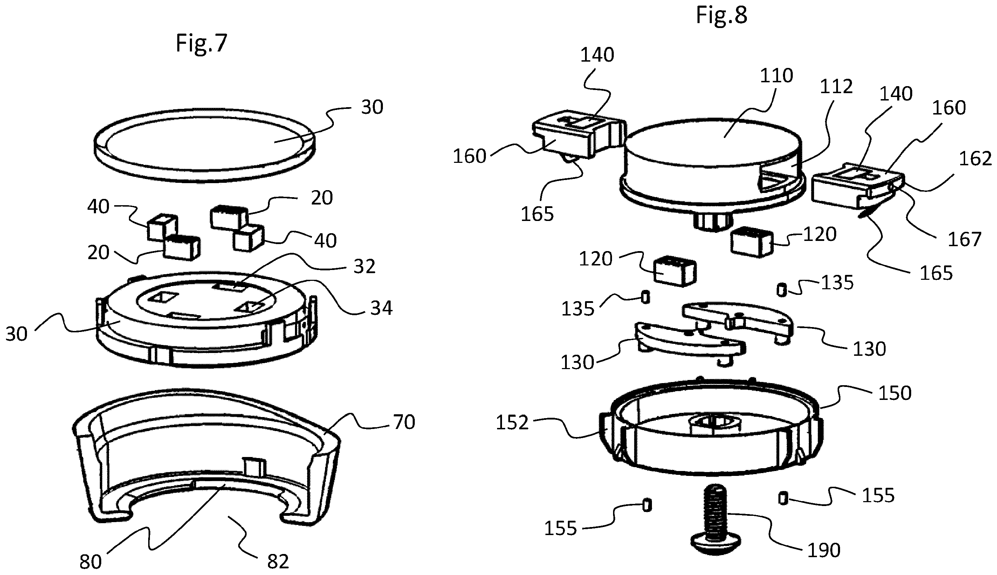

La Figure 7 représente une vue en éclaté d'un article 100 à retenir selon un mode de réalisation. L'article 100 à retenir comporte essentiellement un corps 70, un support 30 d'aimants qui comporte des agencements tels que les cavités 32, 34 destinées à contenir les deuxièmes aimants 20 et les aimants 40 de contact. Le corps 70 comporte une interface 90 de fixation comportant un évidement 80 et une ouverture 82 par laquelle la base de fixation peut être introduite pour la fixation. Le support d'aimants 30 se situe au-dessus de l'évidement 80. L'article 100 à retenir comporte en outre un couvercle 30 qui est destiné à renfermer les aimants 20, 40 dans les cavités 32, 34.

La Figure 8 illustre une vue en éclaté d'une trappe rétractable 200 magnétique selon un mode de réalisation. La trappe 200 comporte essentiellement un corps enveloppant ayant deux ouvertures latérales 112, deux moyens de retenue 160, les premiers aimants 120, et les aimants 140 de mouvement. Le corps enveloppant se constitue essentiellement d'une partie supérieure amovible 110 ayant les ouvertures latérales 112 et un berceau 150. De préférence, les deux éléments 110 et 112 sont assemblés par une vis 190. Les deux moyens de retenue 160 sont mobiles en va-et-vient dans une rainure de translation 112 au sein du corps enveloppant, les extrémités extérieures 162 des deux moyens de retenue 160 pouvant faire saille hors du corps enveloppant et former des crans par les ouvertures latérales 112. Les deux moyens de retenue 160 comprennent chacun un aimant 140 de mouvement. Les premiers aimants 120 sont maintenus opposés par une plaque de maintien aimants 130 à l'intérieur du corps enveloppant. La trappe rétractable 200 est pourvue des moyens à empêcher la rotation de la plaque de maintien et donc celle des premiers aimants 120 par rapport au corps enveloppant. Préférentiellement, les aimants 135, 155 anti-retour sont prévus à cet effet. La plaque de maintien comporte des cavités à contenir les premiers aimants anti-retour 135 qui sont couplés avec les deuxièmes aimants anti-retour 155 fixés à l'extérieur du corps enveloppant, par exemple sur une surface extérieure du berceau 150.

La présente invention concerne de manière générale une base 200 de fixation magnétique, destinée à retenir un article 100 ayant des moyens 62 d'engagement tel que le porte-gobelet de la Fig. 7. La base 200 comporte un premier et un deuxième moyens 160 de retenue qui sont mobiles en va-et-vient entre une position verrouillée et une position déverrouillée, dans la position verrouillée les moyens 160 de retenue pouvant être reçus dans les moyens 62 d'engagement de l'article 100. Le premier moyen 160 de retenue comporte un premier aimant 140 de mouvement, le deuxième moyen 160 de retenue comporte un deuxième aimant 140 de mouvement. En présence d'une force magnétique sur chaque des aimants 140 de mouvement, le premier moyen 160 de retenue et le deuxième moyen 160 de retenue s'écartent et sont expulsés vers la position verrouillée.

Dans certains modes de réalisation, le premier moyen 160 de retenue et le deuxième moyen 160 de retenue sont bloqués en rotation par une rainure de translation 170.

Dans certains modes de réalisation, la base 200 de fixation comporte deux premiers aimants 120 dont les pôles Sud indiquent dans une direction de celle du pôle Nord des aimants 140 de mouvement. Les deux premiers aimants 120 et les deux aimants 140 de mouvement sont disposés rotatifs et alternatifs.

Dans certains modes de réalisation, la base 200 de fixation comporte des moyens anti-retour, tels que des aimants 135 anti-retour, servant à maintenir la base 200 rétractée dans le logement de la structure 300.

De manière générale, les aimants utilisés dans cette invention peuvent être des aimants permanents d'un matériau ferromagnétique.

**LISTE DES SIGNES DE RÉFÉRENCE**

| Références | Désignations |
|---|---|
| 100 | Article à retenir; Accessoire gobelet |
| 20 | Deuxième aimant |
| 30 | Couvercle |
| 32 | Cavité |
| 34 | Cavité |
| 40 | Aimant de contact |
| 62 | Moyens d'engagement ; Rainure |
| 67 | Borne électrique |
| 200 | Base de fixation ; Trappe rétractable |
| 110 | Partie supérieure amovible |
| 112 | Ouverture latérale |
| 120 | Premier aimant |
| 130 | Plaque de maintien aimants |
| 135 | Premier aimant anti-retour |
| 140 | Aimant de mouvement |
| 150 | Berceau |
| 155 | Deuxième aimant anti-retour |
| 160 | Moyen de retenue |
| 162 | Cran de fixation |
| 164 | Butée |
| 167 | Borne électrique |
| 170 | Rainure |
| 190 | Vis de fixation |
| 300 | Structure ; Support console centrale |

## Revendications

1. Système de fixation magnétique comportant une base (200) de fixation magnétique et un article (100) à retenir ayant des moyens (62) d'engagement, la base (200) comportant au moins un premier et un deuxième moyens (160) de retenue qui sont mobiles en va-et-vient entre une position verrouillée et une position déverrouillée, dans la position verrouillée les moyens (160) de retenue pouvant être reçus dans les moyens (62) d'engagement, **caractérisé en ce que**,
- le premier moyen (160) de retenue comporte au moins un premier aimant (140) de mouvement, le deuxième moyen (160) de retenue comporte un deuxième aimant (140) de mouvement,
- l'article (100) à retenir comporte au moins deux aimants (40) de contact,
- les aimants (40) de contact exercent une force sur les aimants (140) de mouvement, ce qui maintient le premier moyen (160) de retenue et le deuxième moyen (160) de retenue dans les moyens (62) d'engagement dans la position verrouillée.

2. Système de fixation selon la revendication 1, **caractérisé en ce que** le premier moyen (160) de retenue et le deuxième moyen (160) de retenue sont bloqués en rotation par une rainure de translation (170).

3. Système de fixation selon la revendication 1 ou 2, **caractérisé en ce que**,
- l'article (100) à retenir comporte une interface (90) de fixation comprenant un évidement (80), les moyens (62) d'engagement présentent une forme de rainure (62),
- dans la position verrouillée la base (200) de fixation est reçue dans l'évidement (80), le premier et le deuxième moyens (160) de retenue servant de crans de fixation viennent en prise dans la rainure (62).

4. Système de fixation selon la revendication 3, **caractérisé en ce que**,
- la base (200) de fixation comporte deux premiers aimants (120), les pôles Sud des deux premiers aimants (120) et les pôles Nord des aimants (140) de mouvement indiquant dans une même direction, les deux premiers aimants (120) et les deux aimants (140) de mouvement étant disposés rotatifs et alternatifs dans un plan,
- l'article (100) à retenir comporte deux deuxièmes aimants (20),
- les deux premiers aimants (120) étant agencés de sorte qu'ils exercent une force d'attraction sur les deux deuxièmes aimants (20) dans la position verrouillée.

5. Système de fixation selon la revendication 4, **caractérisé en ce que** les aimants (40) de contact et les deuxièmes aimants (20) sont disposés rotatifs et alternatifs sur un support (30) d'aimants.

6. Système de fixation selon l'une des revendications 2 à 5, **caractérisé en ce que**, le système de fixation dans la position verrouillée peut être transformée dans la position déverrouillée dans laquelle, par un déplacement rotatif relatif entre la base (200) de fixation et l'article (100) à retenir,
- les deux deuxièmes aimants (20) exercent une force sur les aimants (140) de mouvement, ce qui dégage le premier et le deuxième moyens (160) de retenue dans les moyens (62) d'engagement,
- les aimants (40) de contact exercent une force de répulsion sur les deux premiers aimants (120).

7. Système de fixation selon la revendication 6, **caractérisé en ce que**, le déplacement rotatif est de 90 degrés.

8. Système de fixation selon l'une des revendications 1 à 7, **caractérisé en ce que** la base (200) de fixation et l'article (100) à retenir comportent respectivement des contacts (167, 67) électriques, les contacts (167, 67) étant liés électriquement dans la position verrouillée.

9. Base (200) de fixation magnétique, destinée à retenir un article (100) ayant des moyens (62) d'engagement, la base (200) comporte un premier et un deuxième moyens (160) de retenue qui sont mobiles en va-et-vient entre une position verrouillée et une position déverrouillée, dans la position verrouillée les moyens (160) de retenue pouvant être reçus dans les moyens (62) d'engagement de l'article (100), **caractérisée en ce que**, le premier moyen (160) de retenue comporte un premier aimant (140) de mouvement, le deuxième moyen (160) de retenue comporte un deuxième aimant (140) de mouvement, et qu'en présence d'une force magnétique sur chaque des aimants (140) de mouvement, le premier moyen (160) de retenue et le deuxième moyen (160) de retenue s'écartent et sont expulsés vers la position verrouillée.

10. Base de fixation magnétique selon la revendication 9, **caractérisé en ce que** le premier moyen (160) de retenue et le deuxième moyen (160) de retenue sont bloqués en rotation par une rainure de translation (170).

11. Base de fixation magnétique selon l'une des revendications 9 à 10, **caractérisée en ce que** la base (200) de fixation comporte deux premiers aimants (120), les pôles Sud des deux premiers aimants (120) et les pôles Nord des aimants (140) de mouvement indiquant dans une même direction, les deux premiers aimants (120) et les deux aimants (140) de mouvement étant disposés rotatifs et alternatifs.

12. Base de fixation magnétique selon l'une des revendications 9 à 11, **caractérisée en ce que** la base (200) de fixation peut être agencée sous forme d'une trappe rétractable dans une structure (300), tel qu'un support console centrale.

13. Base de fixation magnétique selon la revendication 12, **caractérisée en ce que** la base (200) de fixation comporte des moyens anti-retour, tels que des aimants (135) anti-retour, servant à maintenir la trappe (200) dans une position rétractée.

14. Véhicule comprenant un système de fixation selon l'une des revendications 1 à 8.

15. Véhicule comprenant une base de fixation magnétique selon l'une des revendications 9 à 13.

## Patentansprüche

1. Magnetisches Befestigungssystem, das eine magnetische Befestigungsbasis (200) und einen zurückzuhaltenden Artikel (100) mit Eingriffsmitteln (62) aufweist, wobei die Basis (200) mindestens ein erstes und ein zweites Rückhaltemittel (160) aufweist, die zwischen einer verriegelten Stellung und einer entriegelten Stellung hin und her beweglich sind, wobei in der verriegelten Stellung die in den Eingriffsmitteln (62) aufnehmbaren Rückhaltemittel (160) **dadurch gekennzeichnet sind, dass**
- das erste Rückhaltemittel (160) mindestens einen ersten Bewegungsmagneten (140) aufweist, das zweite Rückhaltemittel (160) einen zweiten Bewegungsmagneten (140) aufweist,
- der zurückzuhaltende Artikel (100) mindestens zwei Kontaktmagneten (40) aufweist,
- die Kontaktmagneten (40) eine Kraft auf die Bewegungsmagneten (140) ausüben, wodurch das erste Rückhaltemittel (160) und das zweite Rückhaltemittel (160) in den Eingriffsmitteln (62) in der verriegelten Stellung gehalten werden.

2. Befestigungssystem nach Anspruch 1, **dadurch gekennzeichnet, dass** das erste Rückhaltemittel (160) und das zweite Rückhaltemittel (160) durch eine Translationsnut (170) in Drehung arretiert sind.

3. Befestigungssystem nach Anspruch 1 oder 2, **dadurch gekennzeichnet, dass**,
- der zurückzuhaltende Artikel (100) eine Befestigungsschnittstelle (90) aufweist, die eine Aussparung (80) umfasst, wobei die Eingriffsmittel (62) eine Nutform (62) besitzen,
- in der verriegelten Stellung die Befestigungsbasis (200) in der Aussparung (80) aufgenommen wird, wobei das erste und das zweite Rückhaltemittel (160) als Befestigungsrasten in die Nut (62) eingreifen.

4. Befestigungssystem nach Anspruch 3, **dadurch gekennzeichnet, dass**,
- die Befestigungsbasis (200) zwei erste Magneten (120) aufweist, wobei die Südpole der beiden ersten Magneten (120) und die Nordpole der Bewegungsmagneten (140) in dieselbe Richtung zeigen, wobei die beiden ersten Bewegungsmagneten (120) und die beiden Bewegungsmagneten (140) drehbar und abwechselnd in einer Ebene angeordnet sind,
- der zurückzuhaltende Artikel (100) zwei zweite Magneten (20) aufweist,
- wobei die beiden ersten Magneten (120) so angeordnet sind, dass sie in der verriegelten Stellung eine Anziehungskraft auf die beiden zweiten Magneten (20) ausüben.

5. Befestigungssystem nach Anspruch 4, **dadurch gekennzeichnet, dass** die Kontaktmagneten (40) und die zweiten Magneten (20) drehbar und abwechselnd auf einem Magnetträger (30) angeordnet sind.

6. Befestigungssystem nach einem der Ansprüche 2 bis 5, **dadurch gekennzeichnet, dass** das Befestigungssystem in der verriegelten Stellung in die entriegelte Stellung umgewandelt werden kann, in der durch eine relative Drehbewegung zwischen der Befestigungsbasis (200) und dem zurückzuhaltenden Artikel (100),
- die beiden zweiten Magneten (20) eine Kraft auf die Bewegungsmagneten (140) ausüben, wodurch das erste und das zweite Rückhaltemittel (160) in den Eingriffsmitteln (62) freigegeben werden,
- die Kontaktmagneten (40) eine Abstoßkraft auf die beiden ersten Magneten (120) ausüben.

7. Befestigungssystem nach Anspruch 6, **dadurch gekennzeichnet, dass** die Drehbewegung 90 Grad beträgt.

8. Befestigungssystem nach einem der Ansprüche 1 bis 7, **dadurch gekennzeichnet, dass** die Befestigungsbasis (200) und der zurückzuhaltende Artikel (100) jeweils elektrische Kontakte (167, 67) aufweisen, wobei die Kontakte (167, 67) in der verriegelten Stellung elektrisch verbunden sind.

9. Magnetische Befestigungsbasis (200), die zum Zurückhalten eines Artikels (100) mit Eingriffsmitteln (62) bestimmt ist, wobei die Basis (200) ein erstes und ein zweites Rückhaltemittel (160) aufweist, die zwischen einer verriegelten Stellung und einer entriegelten Stellung hin und her beweglich sind, wobei in der verriegelten Stellung die Rückhaltemittel (160) in den Eingriffsmitteln (62) des Artikels (100) aufzunehmen sind, **dadurch gekennzeichnet, dass** das erste Rückhaltemittel (160) einen ersten Bewegungsmagneten (140) aufweist, das zweite Rückhaltemittel (160) einen zweiten Bewegungsmagneten (140) aufweist, und dass sich bei Vorhandensein einer magnetischen Kraft an jedem der Bewegungsmagnete (140) das erste Rückhaltemittel (160) und das zweite Rückhaltemittel (160) auseinanderziehen und in die verriegelte Stellung ausgeworfen werden.

10. Magnetische Befestigungsbasis nach Anspruch 9, **dadurch gekennzeichnet, dass** das erste Rückhaltemittel (160) und das zweite Rückhaltemittel (160) durch eine Translationsnut (170) in Drehung blockiert sind.

11. Magnetische Befestigungsbasis nach einem der Ansprüche 9 bis 10, **dadurch gekennzeichnet, dass** die Befestigungsbasis (200) zwei erste Magneten (120) aufweist, wobei die Südpole der beiden ersten Magneten (120) und die Nordpole der Bewegungsmagneten (140) in eine gleiche Richtung zeigen, wobei die beiden ersten Magneten (120) und die beiden Bewegungsmagneten (140) drehbar und abwechselnd angeordnet sind.

12. Magnetische Befestigungsbasis nach einem der Ansprüche 9 bis 11, **dadurch gekennzeichnet, dass** die Befestigungsbasis (200) in Form einer versenkbaren Klappe in einer Struktur (300), wie einem Mittelkonsolenträger, angeordnet sein kann.

13. Magnetische Befestigungsbasis nach Anspruch 12, **dadurch gekennzeichnet, dass** die Befestigungsbasis (200) Rückschlagsicherungsmittel, wie Rückschlagmagneten (135), aufweist, die dazu dienen, die Klappe (200) in einer eingefahrenen Stellung zu halten.

14. Fahrzeug, das ein Befestigungssystem nach einem der Ansprüche 1 bis 8 umfasst.

15. Fahrzeug, das eine magnetische Befestigungsbasis nach einem der Ansprüche 9 bis 13 umfasst.

## Claims

1. Magnetic fastening system comprising a magnetic fastening base (200) and an article (100) to be held having engagement means (62), the base (200) comprising at least one first and a second holding means (160) which are movable back and forth between a locked position and an unlocked position, in the locked position the holding means (160) being able to be received in the engagement means (62), **characterised in that**,
- the first holding means (160) comprises at least one first movement magnet (140), the second holding means (160) comprises a second movement magnet (140),
- the article (100) to be held comprises at least two contact magnets (40),
- the contact magnets (40) exert a force on the movement magnets (140), which holds the first holding means (160) and the second holding means (160) in the engagement means (62) in the locked position.

2. Fastening system according to claim 1, **characterised in that** the first holding means (160) and the second holding means (160) are locked with respect to rotation by a translation groove (170).

3. Fastening system according to claim 1 or 2, **characterised in that**
- the article (100) to be held comprises a fastening interface (90) comprising a recess (80), the engagement means (62) have a groove shape (62),
- in the locked position, the fastening base (200) is received in the recess (80), the first and second holding means (160) serving as fastening notches come to be engaged in the groove (62).

4. Fastening system according to claim 3, **characterised in that**,
- the fastening base (200) comprises two first magnets (120), the south poles of the two first magnets (120) and the north poles of the movement magnets (140) indicating in one and the same direction, the two first magnets (120) and the two movement magnets (140) being arranged rotatably and alternately in one plane,
- the article (100) to be held comprises two second magnets (20),
- the two first magnets (120) being arranged so that they exert an attraction force on the two second magnets (20) in the locked position.

5. Fastening system according to claim 4, **characterised in that** the contact magnets (40) and the second magnets (20) are arranged rotatably and alternately on a magnet support (30).

6. Fastening system according to one of claims 2 to 5, **characterised in that** the fastening system in the locked position can be transformed into the unlocked position in which, by a relative rotary movement between the fastening base (200) and the article (100) to be held,
- the two second magnets (20) exert a force on the movement magnets (140), which releases the first and second holding means (160) in the engagement means (62),
- the contact magnets (40) exert a repulsive force on the two first magnets (120).

7. Fastening system according to claim 6, **characterised in that** the rotary movement is 90 degrees.

8. Fastening system according to one of claims 1 to 7, **characterised in that** the fastening base (200) and the article (100) to be held respectively comprise electrical contacts (167, 67), the contacts (167, 67) being electrically connected in the locked position.

9. Magnetic fastening base (200), intended to hold an article (100) having engagement means (62), the base (200) comprises a first and a second holding means (160) which are movable back and forth between a locked position and an unlocked position, in the locked position the holding means (160) being able to be received in the means (62) of engaging the article (100), **characterised in that** the first holding means (160) comprises a first movement magnet (140), the second holding means (160) includes a second movement magnet (140), and that in the presence of a magnetic force on each of the movement magnets (140), the first holding means (160) and the second holding means (160) move apart and are ejected toward the locked position.

10. Magnetic fastening base according to claim 9, **characterised in that** the first holding means (160) and the second holding means (160) are locked with respect to rotation by a translation groove (170).

11. Magnetic fastening base according to one of claims 9 to 10, **characterised in that** the fastening base (200) comprises two first magnets (120), the south poles of the two first magnets (120) and the north poles of the movement magnets (140) indicating in one and the same direction, the two first magnets (120) and the two movement magnets (140) being arranged in a rotary and alternating manner.

12. Magnetic fastening base according to one of claims 9 to 11, **characterised in that** the fastening base (200) can be arranged in the form of a retractable hatch in a structure (300), such as a central console support.

13. Magnetic fastening base according to claim 12, **characterised in that** the fastening base (200) comprises anti-return means, such as anti-return magnets (135), used to hold the hatch (200) in a retracted position.

14. Vehicle comprising a fastening system according to one of claims 1 to 8.

15. Vehicle comprising a magnetic fastening base according to any one of claims 9 to 13.
